# EUROPEAN PATENT SPECIFICATION

(11) **EP 2 513 673 B1**
(45) Date of publication and mention of the grant of the patent: **26.03.2014**
(21) Application number: 10790698.4
(22) Date of filing: 01.12.2010
(51) Int. Cl.: G01V 1/147

(54) **MAGNETIC MASS-LIFT IMPULSIVE SEISMIC ENERGY SOURCE**
SEISMISCHE ENERGIEIMPULSQUELLE MIT MAGNETISCHER MASSENAUFHEBUNG
SOURCE D'ÉNERGIE SISMIQUE À IMPULSION AVEC ÉLÉVATION MAGNÉTIQUE DE LA MASSE

(30) Priority: 15.12.2009 US 653494
(43) Date of publication of application: 24.10.2012
(73) Proprietor: Geokinetics Acquisition Company, Houston, TX 77042 (US)
(72) Inventor: GREIG, Malcolm, John, Sugar Land, TX 77498 (US)
(74) Representative: Lord, Michael
(86) International application number: PCT/US2010/003067
(87) International publication number: WO 2011/075159

(56) References cited:
- JP-A- 2008 209 391
- RU-C1- 2 171 478
- RU-C1- 2 335 001
- RU-C2- 2 216 753
- US-A- 4 821 246

## Description

### Background of the Invention

### Field of the Invention

The invention relates generally to the field of seismic energy sources. More particularly, the invention relates to impulsive seismic energy sources using electromagnets to move a mass.

### Background Art

Seismic surveying includes imparting seismic energy from a seismic energy source into rock formations below the land surface, or below the bottom of a body of water in marine environments. The seismic energy travels from the source, through the rock formations and is reflected from acoustic impedance boundaries in the subsurface. Such acoustic impedance boundaries are typically at the interfaces of layers of different rock formations. The reflected seismic energy is detected by a plurality of seismic receivers disposed at the surface, on the water bottom or in the water. The detected seismic energy is interpreted to infer, among other things, structure and composition of the rock formations below the surface or water bottom.

Seismic energy sources known in the art include "impulsive" sources. Impulsive sources impart seismic energy into the subsurface in short duration events, wherein in each event substantially all the seismic energy is generated at the same time. Impulsive sources include, among others, air guns, water guns, dynamite and weight drop devices.

Another type of impulsive seismic energy source known in the art uses electromagnets to lift a moveable reaction mass towards a top block composed of laminated magnetic steel, which rests on top of a frame. The reaction of lifting the mass towards the top block is transferred via the frame to a base plate in contact with the ground. The movable mass is caused to move when the electromagnet therein is actuated to cause attraction between the electromagnet and the top block above it. A limitation to the foregoing type of mass lift impulsive seismic source known in the art is that the magnetic attractive force between the electromagnet and the top block is inversely related to the distance between them. Thus, on actuation, the attractive force between the electromagnet on the movable mass and the steel top block is smallest. Therefore, the maximum distance that the movable mass may be disposed from the top block when the movable mass is at rest is limited. Since no force can be transmitted to the ground once the attracting surfaces of the moving mass and top block meet, the above distance limitation will impose an absolute limit on the active stroke of the device, and thus the maximum attainable ground movement caused by the base plate. Further, because the attractive force between electromagnet and top block increases as the distance there between is reduced, the movable mass tends to accelerate during its travel toward the top block, limiting the accuracy of timing of seismic impulses generated by the source.

There continues to be a need for improved mass lift seismic energy sources.

### Summary of the Invention

A seismic energy source according to one aspect of the invention includes a base plate having a first electromagnet thereon. A reaction mass has a second electromagnet thereon. A switchable current source is connected to the first and second electromagnets such that the first electromagnet repels the second electromagnet. At least one damper is functionally connected between the reaction mass and the base plate. The damper is configured to enable faster movement of the reaction mass away from the base plate than toward the base plate.

A method for seismic surveying according to another aspect of the invention includes actuating a first electromagnet associated with a reaction mass and a second electromagnet associated with a base plate in contact with a ground surface so as to cause the reaction mass to lift away from the base plate. The first electromagnet and the second electromagnet are deactivated such that gravity draws the reaction mass toward the base plate. Motion of the reaction mass toward the base plate is damped sufficiently to substantially prevent generation of an impulse when the reaction mass contacts the base plate.

Other aspects and advantages of the invention will be apparent from the following description and the appended claims.

### Brief Description of the Drawings

FIG. 1 shows an example seismic source and seismic receivers.
FIG. 2 shows an alternative example of the seismic source of FIG. 1.

### Detailed Description

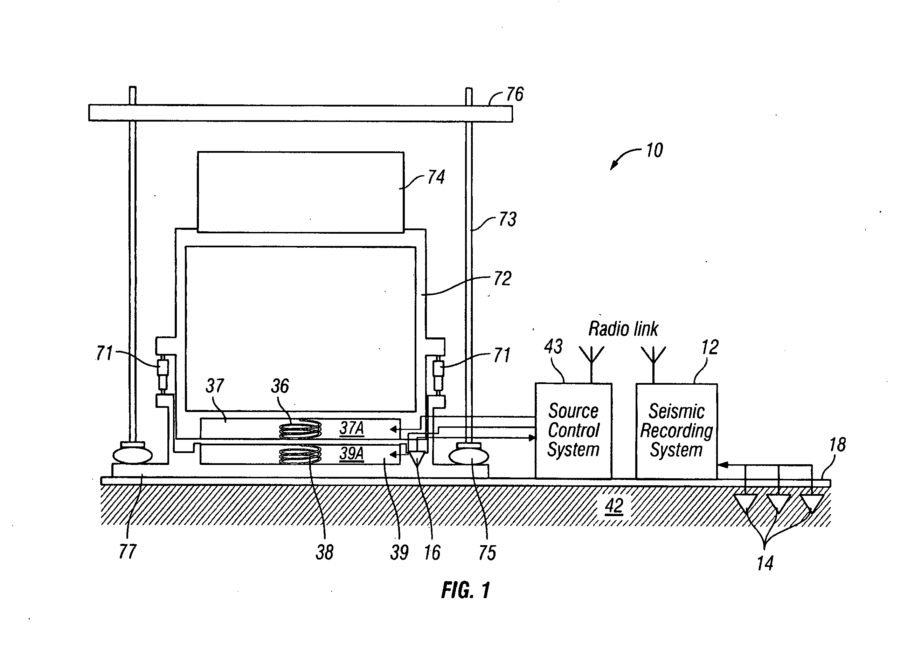

An example seismic acquisition system including a mass lift seismic energy source according to the invention is shown schematically in FIG. 1. The source 10 is disposed at a selected position on the Earth's surface 18 (or in a body of water) above subsurface rock formations 42 to be evaluated. A plurality of seismic receivers 14 such as geophones, hydrophones or accelerometers may be disposed at spaced apart locations on the surface, in the body of water or on the bottom of the body of water above the subsurface rock formations 42. The receivers 14 generate electrical and/or optical signals in response to seismic energy detected from the subsurface formations 42. The signals generated by the receivers 14 may be conducted to a recording system 12. The recording system may include devices (not shown separately) for making a time indexed record of the signals detected by the receivers 14. The recording time is typically indexed to the actuation time of the seismic energy source 10. The source 10 may be actuated by a source control 43 that may be in signal communication with the recording system 12 using a radio link. Signals to actuate the source 10 may originate in the recording system 12 and be transmitted to the source control system 43 over the radio link. Using such configuration, the source 10 may be disposed remotely from the recording unit 12 without the need to connect the source control unit 43 to the recording unit with electrical cable.

The source 10 may include a frame 72 which can be rigidly fixed to a reaction mass. In one example, explained further below, the reaction mass may consist of the vehicle (shown schematically at 76) which transports the source 10 to a desired location. In the example shown in FIG. 1, the mass, shown at 74, may be a separate component which can move independently of the vehicle 76.

A first electromagnet 37 may be fixed under the base of the frame 72. The frame 72 when it is in the rest position (electromagnets not activated) is in contact with one side of a base plate 77 disposed under the frame 72. The other side of the base plate 77 is in contact with the ground 18 (or water or water bottom). A second electromagnet 39 may be disposed on top of the base plate 77. The assembly consisting of the base plate 77 and the second electromagnet 39 can be laterally constrained to slide up and down relative to the frame 72, but have substantially no freedom of movement side to side. The first 37 and second 39 electromagnets may each include a wire coil 36, 38, respectively, disposed in magnetically permeable material, 37A and 39A.

The speed of relative movement between the base plate 77 and the frame 72 may be limited in either or both directions by a plurality of dampers 71 which are connected between the frame 72 and the base plate 77. The dampers 71 may enable the base plate assembly 77 to move downwardly relative to the frame 72 at a predetermined speed. In some examples the downward motion of the base plate 77 relative to the frame 72 may be unconstrained (that is, the dampers provide no damping in such direction). The dampers 71 are also configured to limit the speed at which the base plate assembly 77 can move upwardly relative to the frame 72. The upward speed is preferably lower than that for the base plate 77 assembly to move downwardly relative to the frame 72. The dampers 71 may in some examples be hydraulic, and may include a valve (not shown) with an internal piston which allows oil to flow at a certain speed one way through the piston, but to flow at a different speed in the opposite direction. In other examples, the dampers 71 may be electromagnetic. In still other examples, the dampers 71 may include an electro-rheological fluid so that the damping can be electrically controlled, e.g., by the source control system 43.

In the present example, wherein the mass 74 is a separate component, there may be installed various connecting links and framing components, shown generally at 73 and referred to for convenience as a "structure" which enables the vehicle 76 to exert downward force on the base plate 77. The structure 73 can be coupled to the base plate 77 to enable the base plate 77 to move upwardly and downwardly relative to the vehicle 76. The foregoing feature may be provided by connecting the structure 73 to the base plate 77 using flexible, gas filled containers 75 known in the art as air bags.

In the rest position the two electromagnets 37, 39 will be in contact. The source 10 is actuated by passing an electric current from the source control system 43 through the electromagnet coils 36, 38 in a direction such that the first 37 and second 39 electromagnets repel each other. The repulsion lifts the frame 72 and the mass 74. Reaction to the foregoing motion causes the base plate 77 to be forced into the ground 18. Forcing the base plate 77 into the ground 18 creates a seismic impulse. The fact that the impulse is caused by a precisely controllable electrical event means that this type of source can be readily synchronized in a fleet of similarly configured seismic sources in order to increase the magnitude of the impulse. It can likewise be readily synchronized with the seismic record made in the recording unit 12.

Once the electric current ceases to flow through the coils 36, 38, the frame 72 and the mass 74 will drop toward the base plate 77 by the effect of gravity. The rate at which the frame 72 and mass 74 can drop is limited by the dampers 71. The dampers 71 are preferably configured so that the movement of the frame 72 toward the base plate 77 after the electric current ceases does not result in an impact between the frame 72 and the base plate 77. Such impact would adversely affect the quality of the impulse transmitted into the ground 18. The dampers 71 may also be configured to limit any tendency for the base plate 77 to leave the ground after the impulse is generated. In the present example, the weight of the vehicle 76, which is communicated to the base plate 77 through the structure 73 and air bags 75, may also limit the tendency for the base plate 77 to leave the ground 18 after the impulse is generated.

The base plate 77 may include thereon a motion sensor 16 such as a geophone or accelerometer to measure the motion of the base plate 77. The signal generated by the motion sensor may be electrical or optical and may be conducted to the recording unit 12 using the radio link.

Suitable configuration of the dampers 71 (i.e., suitably limiting the upward speed of the frame 72) may enable controlling the effective duration-of the impulse transmitted into the ground 18 when the electromagnets 37, 39 are actuated. Controlling the duration of the impulse will have the effect of controlling the frequency content of the impulse. It is desirable to produce more energy at lower frequencies, because lower frequencies penetrate the subsurface better.

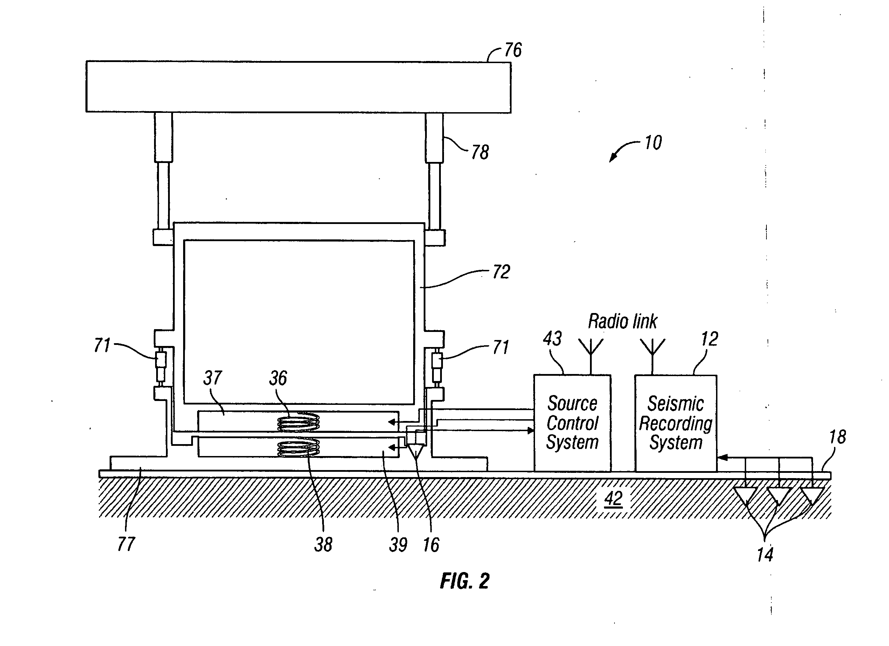

In other examples, the mass can consist of essentially the entire transport vehicle Referring to FIG. 2, there may be installed a lift system 78, which may be hydraulic or may be electric motors turning respective worm gears with ball nuts on the frame 72, and which couples the frame 72 to the vehicle 76 chassis at a suitable location, and when operated causes the frame 72 to be lowered to the ground. The weight of the vehicle can then be transferred on to the frame 72, such that the frame 72 and the vehicle 76 then effectively become a single rigid mass for the purposes of the subsequent activation of the source 10. The electromagnets 37, 39 may be configured substantially as explained with reference to FIG. 1.

In the rest position the two electromagnets 37, 39 will be in contact. The source 10 is activated by passing a current through the electromagnets' coils 36, 38 in a direction such that they repel each other. The repulsion causes the base plate 77 to be forced into the ground and the mass to rise. Forcing the base plate 77 into the ground 18 creates an impulse which is used to investigate the subsurface structure. The fact that the impulse is caused by a precisely controllable electrical event means that this type of source can be synchronized in a fleet with similar sources in order to increase the magnitude of the impulse. It can likewise be synchronized with the seismic record.

One significant advantage of a seismic energy source according to the present examples wherein only magnetic repulsion is used as contrasted with previous magnetic lift sources that use attraction between two electromagnets is that the source of the present invention avoids impact of the electromagnets with each other at great speed. In the present invention there is no physical impact between parts of the actuator. Such impact is undesirable since it wastes some energy by creating unwanted audio noise (known as "air blast") which may degrade the reflected seismic signal detected by the seismic sensors. Further, the "air blast" may be objectionable in certain areas, such as environmentally sensitive or heavily populated areas. The latter advantage may enable use of a seismic source according to the invention in areas where the use of explosives and large, noisy seismic vibrators has been prohibited.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A seismic energy source, comprising:
a base plate (77) having a first electromagnet (37) thereon;
a reaction mass (74) having a second electromagnet (39) thereon;
a switchable current source (43) connected to the first and second electromagnets such that the first electromagnet (37) repels the second electromagnet (39);
and at least one damper (71) functionally connected between the reaction mass (74) and the base plate (77), the at least one damper (71) configured to enable faster movement of the reaction mass (74) away from the base plate (77) than toward the base plate.

2. The seismic energy source of claim 1 further comprising a motion sensor coupled to the base plate.

3. The seismic energy source of claim 1 wherein the reaction mass is coupled to a frame, the frame slidably disposed in a structure attached to a transport vehicle.

4. The seismic energy source of claim 1 further comprising a lift system coupled between a selected part of the transport vehicle and the frame, such that the transport vehicle serves are a reaction mass.

5. The seismic energy source of claim 3 wherein the at least one damper is coupled to the base plate and to the frame.

6. The seismic energy source of claim 3 further comprising a structure to couple at least part of the mass of the transport vehicle to the base plate, the structure including devices to enable relative motion between the vehicle and the base plate.

7. The seismic energy source of claim 5 wherein the devices to enable relative motion comprise flexible, gas-filled containers.

8. The seismic energy source of claim 1 wherein the at least one damper has separately selectable damping for each direction of motion.

9. A method for generating seismic energy, comprising:
actuating a first electromagnet (37) associated with a reaction mass (74) and a second electromagnet (39) associated with a base plate (77) in contact with a ground surface so as to cause the reaction mass (74) to lift away from the base plate (77);
deactivating the first electromagnet (37) and the second electromagnet (39) such that gravity draws the reaction mass (74) toward the base plate (77); and
damping motion of the reaction mass (74) toward the base plate (77) sufficiently to substantially prevent generation of an impulse when the reaction mass (74) contacts the base plate (77).

10. The method of claim 9 further comprising damping motion of the reaction mass away from the base plate sufficiently to increase a low frequency content of a seismic impulse imparted to the ground by moving the reaction mass away from the base plate.

11. The method of claim 9 further comprising changing the damping the motion of the reaction mass away from the base plate to adjust the low frequency content of the seismic impulse.

12. The method of claim 9 further comprising measuring motion of the base plate.

## Patentansprüche

1. Eine seismische Energiequelle bestehend aus:
einer Grundplatte (77), auf der ein erster Elektromagnet (37) ist;
einer Reaktionsmasse (74), auf der ein zweiter Elektromagnet (39) ist;
einer schaltbaren Stromquelle (43), die so an den ersten und den zweiten Elektromagneten angeschlossen ist, dass
der erste Elektromagnet (37) den zweiten Elektromagneten (39) abstößt;
und zumindest einem Dämpfer (71), der der funktional zwischen der Reaktionsmasse (74) und der Grundplatte (77) angeschlossen ist, wobei der zumindest ein Dämpfer (71) so konfiguriert ist, dass er eine schnellere Bewegung der Reaktionsmasse (74) von der Grundplatte (77) weg als in Richtung der Grundplatte ermöglicht.

2. Die seismische Energiequelle entsprechend Anspruch 1, zu der weiterhin ein Bewegungsmelder gehört, der mit der Grundplatte verbunden ist.

3. Die seismische Energiequelle entsprechend Anspruch 1, wobei die Reaktionsmasse mit einem Gestell verbunden ist und das Gestell verschiebbar in einer Konstruktion sitzt, die mit einem Transportfahrzeug verbunden ist.

4. Die seismische Energiequelle entsprechend Anspruch 1, zu der weiterhin ein Aufzugsystem gehört, das zwischen einem ausgewählten Teil des Transportfahrzeugs und des Gestells so angeschlossen ist, dass das Transportfahrzeug als Reaktionsmasse dient.

5. Die seismische Energiequelle entsprechend Anspruch 3, wobei der zumindest eine Dämpfer mit der Grundplatte und mit dem Gestell verbunden ist.

6. Die seismische Energiequelle entsprechend Anspruch 3, zu der weiterhin eine Konstruktion gehört, um zumindest einen Teil der Masse des Transportfahrzeugs mit der Grundplatte zu verbinden, wobei zur Konstruktion Einrichtungen gehören, welche eine relative Bewegung zwischen dem Fahrzeug und der Grundplatte ermöglichen.

7. Die seismische Energiequelle entsprechend Anspruch 5, wobei die Einrichtungen zur Ermöglichung der relativen Bewegung flexible, gasgefüllte Behälter sind.

8. Die seismische Energiequelle entsprechend Anspruch 1, wobei der zumindest eine Dämpfer separat wählbare Dämpfung für jede Bewegungsrichtung aufweist.

9. Ein Verfahren zur Erzeugung seismischer Energie bestehend aus:
Aktivieren eines ersten Elektromagneten (37), der mit einer Reaktionsmasse (74) verbunden ist, und eines zweiten Elektromagneten (39), der mit einer Grundplatte (77) verbunden, die mit einer Erdoberfläche in Kontakt ist, damit verursacht wird, dass sich die Reaktionsmasse (74) von der Grundplatte (77) abhebt;
Deaktivieren des ersten Elektromagneten (37) und des zweiten Elektromagneten (39), so dass Schwerkraft die Reaktionsmasse (74) in Richtung Grundplatte (77) zieht; und
ausreichendem Dämpfen der Bewegung der Reaktionsmasse (74) in Richtung Grundplatte (77), um im Wesentlichen die Erzeugung eines Impulses zu verhindern, wenn die Reaktionsmasse (74) die Grundplatte (77) berührt.

10. Das Verfahren entsprechend Anspruch 9, zu dem weiterhin das ausreichende Dämpfen der Bewegung der Reaktionsmasse von der Grundplatte weg gehört, um einen Niederfrequenzgehalt eines seismischen Impulses zu erhöhen, der der Erde durch Bewegen der Reaktionsmasse von der Grundplatte weg zugeführt wird.

11. Das Verfahren entsprechend Anspruch 9, zu dem weiterhin das Ändern des Dämpfens der Bewegung von der Reaktionsmasse von der Grundplatte weg gehört, um den Niederfrequenzgehalt des seismischen Impulses anzupassen.

12. Das Verfahren entsprechend Anspruch 9, zu dem weiterhin das Messen der Bewegung der Grundplatte gehört.

## Revendications

1. Source d'énergie sismique, comprenant :
une plaque de base (77) sur laquelle se trouve un premier électroaimant (37) ;
une masse réactionnelle (74) sur laquelle se trouve un deuxième électroaimant (33) ;
une source de courant commutable (43) raccordée aux premier et
deuxième électroaimants de sorte
que le premier électroaimant (37) repousse le deuxième électroaimant (39) ;
et au moins un amortisseur (71) fonctionnellement connecté entre la masse réactionnelle (74) et la plaque de base (77), le au moins un amortisseur (71) étant configuré pour permettre un mouvement de la masse réactionnelle (74) qui est plus rapide à distance de la plaque de base (77) qu'en direction de la plaque de base.

2. Source d'énergie sismique selon la revendication 1 comprenant en outre un capteur de mouvement accouplé à une plaque de base.

3. Source d'énergie sismique selon la revendication 1, dans laquelle la masse réactionnelle est accouplée à un châssis, le châssis étant placé de façon coulissante dans une structure attachée au véhicule de transport.

4. Source d'énergie sismique selon la revendication 1 comprenant en outre un système de relevage accouplé entre une partie sélectionnée du véhicule de transport et du châssis, de sorte que le véhicule de transport serve de masse réactionnelle.

5. Source d'énergie sismique selon la revendication 3, dans laquelle le au moins un amortisseur est accouplé à la plaque de base et au châssis.

6. Source d'énergie sismique selon la revendication 3, comprenant en outre une structure afin d'accoupler au moins une partie de la masse du véhicule de transport à la plaque de base, la structure comportant des dispositifs pour permettre un mouvement relatif entre le véhicule et la plaque de base.

7. Source d'énergie sismique selon la revendication 5, dans laquelle les dispositifs permettant un déplacement relatif sont des contenants flexibles remplis de gaz.

8. Source d'énergie sismique selon la revendication 1, dans laquelle le au moins un amortisseur présente un amortissement séparément sélectionnable pour chaque direction de déplacement.

9. Procédé de génération d'énergie sismique, comprenant :
l'activation d'un premier électroaimant (37) associé à une masse réactionnelle (74) et d'un deuxième électroaimant (39) associé à une plaque de base (77) en contact avec une surface de sol pour forcer la masse réactionnelle (74) à s'écarter de la plaque de base (77) ;
la désactivation du premier électroaimant (37) et du deuxième électroaimant (39) de sorte que la gravité attire la masse réactionnelle (74) en direction de la plaque de base (77), et
un mouvement d'amortissement de la masse réactionnelle (74) en direction de la plaque de base (77) suffisant pour empêcher sensiblement la génération d'une impulsion lorsque la masse réactionnelle (74) vient en contact avec la plaque de base (77).

10. Procédé selon la revendication 9 comprenant en outre un mouvement d'amortissement de la masse réactionnelle à distance de la plaque de base suffisant afin d'augmenter un contenu de basse fréquence d'une impulsion sismique impartie au sol en déplaçant la masse réactionnelle à distance de la plaque de base.

11. Procédé selon la revendication 9 comprenant en outre un mouvement d'amortissement de la masse réactionnelle à distance de la plaque de base afin de régler le contenu de basse fréquence de l'impulsion sismique.

12. Procédé selon la revendication 9 comprenant un mouvement de mesure de la plaque de base.
